# EUROPEAN PATENT APPLICATION

(11) **EP 4 660 350 A1**
(43) Date of publication of application: **10.12.2025**
(21) Application number: 24205424.5
(22) Date of filing: 08.10.2024
(51) Int. Cl.: C25B 1/04, C25B 1/50, C25B 9/60, C25B 15/08

(54) **METHOD AND DEVICE FOR PRODUCING HYDROGEN AND OXYGEN FROM WATER AND AQUEOUS SOLUTIONS**

(30) Priority: 05.06.2024 EE 202400017
(71) Applicant: SonoPlasmaH2 OÜ, 10142 Tallinn (EE)
(72) Inventor: Mazaev, Vladimir, 124527 Moscow (RU); Rogov, Jevgeni, 10125 Tallinn (EE)
(74) Representative: Koitel, Raivo

(57) **Abstract**

The invention is aimed to create a method for producing hydrogen and oxygen from water and aqueous solutions, which ensures increased productivity and reduced energy consumption. In the method, electrical energy in the process of water electrolysis is used in the plasma electrolytic process mode between the anode and cathode in water with the removal of hydrogen from the cathode region and oxygen from the anode region, while the water is simultaneously subjected to acoustic impact induced by a piezoelectric emitter, wherein the acoustic impact propagation vector is perpendicular to the electric field vector, the obtained gaseous hydrogen and oxygen are captured separately by electromagnetic separators with oppositely directed magnetic fields. The device for producing hydrogen and oxygen from water and aqueous solutions consists of a reactor in the form of a container with water, in the reactor there is a piezo-acoustic emitter, the power source is connected to the anode and cathode, in which the thermionic insert is made of tungsten, zirconium or hafnium, and the branch pipes of electromagnetic output separators.

## Description

### Technical field

The invention relates to physical and chemical technologies for producing hydrogen and oxygen and can be used to produce hydrogen fuel from water and various aqueous compositions: weakly alkaline solutions; distilled water; solutions with biological and inorganic additives; waste water, sea water and ocean water.

### Prior Art

Known is the patent RU No. 2279497, in which plasma electrolytic impact on water is employed to produce water vapour, hydrogen and oxygen, wherein the plasma electrolytic impact on water is implemented in a capillary-porous hydrophilic material between the anode and cathode with the removal of gaseous phase - hydrogen from the cathode region, and oxygen from the anode region, and the plasma electrolytic process itself is initiated and maintained by means of supplying an inert gas. This method requires significant amounts of energy for initiating a plasma electrolytic process in the liquid, and is only feasible with the use of an inert gas.

Known is the patent RU No. 81964 entitled "Ultrasonic device for producing hydrogen". In this patent, a technology for obtaining fuel gas from water under the effect of an electric field and an ultrasonic emitter has been proposed. It makes use of a practically currentless electrostatic and at the same time ionic pump, which raises a column of liquid, which has been polarized and partially ionized by the field, in a capillary of a micron-diameter column. This device, which contains a capillary unit for liquid transmission, excludes the use of aqueous solutions and can not operate with water containing impurities.

Known is the patent RU No. 2157427 entitled "Device for obtaining thermal energy, hydrogen and oxygen", in which the method of decomposition of water is implemented under the effect of a permanent magnetic field in addition to an electric field. Atomic hydrogen plasma is formed in the cathode region. The presence of a permanent magnetic field in addition to the electric field in the plasma zone intensifies the processes of water heating and water decomposition into hydrogen and oxygen. This increases the energy efficiency of the process. The energy efficiency indicator assumes the value of Kₒ = 1.7 ±0.20. The disadvantage of the known method is that the magnetic field only exerts its effect on water in one direction, it only contributes to the concentration of additional thermal energy, i.e. it does not participate in the active process of separation and capture of atomic oxygen and hydrogen.

Known is the patent UK Patent GB 2 405 255 B entitled "A plasma formed in a fluid", wherein a liquid (aqueous solution) is placed in a bath containing a pair of spaced electrodes representing a cathode and anode. Next, a stream of bubbles is created, which is introduced or generated inside the liquid adjacent to the cathode. A potential difference is applied to the cathode and anode, so that a glow discharge is formed in the bubble region, and a plasma of ionized gas molecules is formed inside the bubbles. The disadvantage of this method is the low productivity of hydrogen due to the production of ionized molecules requiring further purification and separation into hydrogen and oxygen, as well as the lack of stable (controlled) plasma formation and means to ensure equal impact on the entire volume of process liquid in terms of impact density. The process is implemented at constant or alternating voltage within the range from 350 V to 3,000 V. The absence of a gas trap system at the final stage of gas production and separation reduces the efficiency of the method.

The closest analogue to the invention in terms of its technical essence is the method and device for producing hydrogen described in patent application No. US20100000876 entitled "System for sonochemical production of hydrogen using cavitation", in which the method for producing hydrogen includes letting an electric current pass through a solution containing hydrogen and generating cavitation inside the solution, wherein cavitation reduces the amount of energy required to break the chemical bonds within the solution, and cavitation is generated in the solution by letting acoustic energy pass through the solution. The disadvantage of the known system is its low productivity and instability of the process due to the lack of necessary parameters for influencing the aqueous solution, lack of control and monitoring of hydrogen production process.

### Object of the invention

The objective of the invention is to create a method for producing hydrogen and oxygen from water and aqueous solutions, which ensures increased productivity and reduced energy consumption.

Finding solution to the problem with the achievement of the technical result stated in the method for generating hydrogen and oxygen from water and aqueous solutions, including waste water, sea and ocean water, including the electrolysis of water under the action of an electric current passing between the electrodes with the formation of gaseous hydrogen on the cathode and gaseous oxygen on the anode and acoustic impact on water using an acoustic transducer, removal of gaseous hydrogen from the cathode region and oxygen from the anode region, according to the invention, electrical energy is used in the plasma electrolytic process mode, bringing the water between the anode and cathode into a state of plasma, while simultaneously applying acoustic impact on the water by means of a piezoelectric emitter, wherein the acoustic impact propagation vector is perpendicular to the direction of electric current between the anode and cathode, the resulting gases, hydrogen and oxygen, are captured separately by electromagnetic separators with oppositely directed magnetic fields, while the emergence and maintenance of plasma electrolytic process of water decomposition is carried out by adjusting the output parameters of the power source, which is engaged in the electrical impact, from the following ranges of their values: voltage: from 5 V to 200 V; electric current from 120 A to 200 A; frequency from 30 kHz to 100 kHz; and selection of the acoustic impact frequency from the range of values from 1 kHz to 2.4 MHz with a sound wave power of not less than 1 W/cm². The mode of acoustic impact, which is applied to an aqueous solution, can be pre-cavitational or cavitational. The device for producing hydrogen and oxygen from water and aqueous solutions contains a piezoacoustic emitter, a power source, which is connected to the anode and cathode, in which there is a thermo-emission insert, which is made of tungsten, zirconium or hafnium, and electromagnetic output separator branch pipes, wherein the branch pipes are connected to a DC power source.

### List of figures

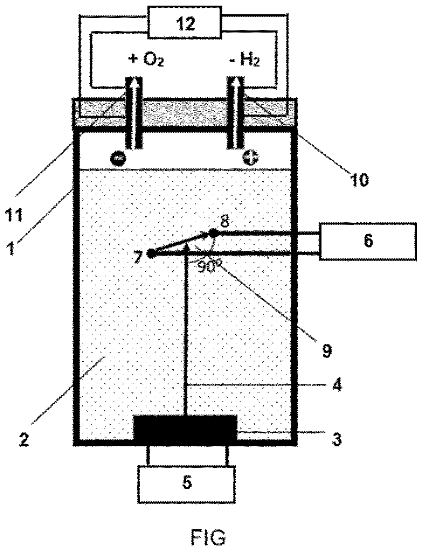

The figure shows a diagram of the invention.

### Description of the invention

The process for obtaining hydrogen from aqueous solutions using the new plasma-sonolysis method can be defined as a step-by-step occurrence of three interconnected processes:
- application of acoustic wave impact to the aqueous solution in pre-determined modes with the aim to disrupt the bonds between water molecules;
- application of electrical impact to the modified aqueous solution through plasma electrodes with the aim of its separation into ionized molecules of hydrogen and oxygen;
- creation of electromagnetic flow lines with the aim of collecting charged gas molecules into a separate reservoir for each of the obtained gases.

The acoustic impact is achieved by the use of piezoelectric emitters. For the application of acoustic impact, emitters are used, which are made on the basis of piezoelectric elements assembled into a piezoelectric package.

Ultrasound propagates in water in the form of longitudinal and transverse waves, which cause variable deviations of pressure from equilibrium, thereby initiating the emergence of local areas of compression of the medium. This movement intensifies the movement of water molecules in the interelectrode space of the electric field.

Ultrasonic acoustic impact is applied to the water both in pre-cavitational and cavitational modes. The emergence of cavitation bubbles, the high speeds of their compression and collapse, the temperature and pressure inside them increase the speed of movement of water molecules, and also contribute to the disruption of the bonds between water molecules. Less electrical energy is required to initiate and maintain the plasma electrolytic process, which occurs simultaneously with the application of acoustic impact, while the electrical energy consumption is more than two times less than in analogues. The results of experimental studies confirming a reduction in energy consumption compared to the methods of hydrogen production, which are currently applied in industrial applications, are summarized in the table below.

**Table**

| Pos. No. | Water decomposition method | Energy consumption, H₂ m³/kWh | Electrolyte type | Temperature, K | Pressure, bar |
|---|---|---|---|---|---|
| 1 | "Classical" electrolysis (alkaline; with solid polymer electrolyte; with solid oxide electrolyte) | 3.5-5.5 | Alkaline solutions; distilled water | 320-1,270 | Up to 30 |
| 2 | Plasma electrolytic sonic method | Up to 1.8 | Alkaline solutions; distilled water; ocean water | Up to 5,000 | Up to 100 |

The emergence of plasma in the cathode zone leads to a significant reduction in the current that flows through during conventional water electrolysis. Thanks to this, energy consumption for the electrolysis process is sharply reduced. In the cathode, the thermionic insert is made of tungsten, zirconium or hafnium. Alongside with that, during the plasma electrolytic process, acoustic impact is applied to the weakened structural bonds of water molecules, which significantly increases the rate of water decomposition and the rate of gas emission, resulting in a several-fold increase in productivity.

Under the effect of directional acoustic pressure, the flow of obtained molecular hydrogen and oxygen gases rushes to the branch pipes of the active electromagnetic separator, which affects the flow of gases with oppositely directed magnetic fields. The oppositely directed magnetic fields are created by two electromagnets, which are intended for the effective separation and capture of the resulting flows of gaseous hydrogen and oxygen with corresponding signs for each of the gases. An electromagnetic field with pre-determined "signs" parameters is obtained by installing induction coils on the outlet gas branch pipes, which are powered by a DC power source.

Separation begins in water molecules in the plasma state with a simultaneous ionization process, first into atomic hydrogen (+H) and oxygen (-O), then their combination into hydrogen (-H₂) and oxygen (+O₂) molecules and the movement of the obtained charged molecules to the corresponding electromagnetic branch pipes, according to the polarity of the electromagnetic field and the charge of the molecules of each gas.

The process of dissociation of molecules of aqueous solutions with the formation of plasma depends significantly not only on the values of the parameters of electrical, acoustic and magnetic impacts, but also on the type and properties of the solution due to the fact that its dielectric constant changes thanks to the presence of impurities in such a hydrogen-containing environment as sea water and waste water, as a result of which the productivity of the dissociation process decreases.

The mode of acoustic impact applied to an aqueous solution can be either pre-cavitational or cavitational, depending on the physical and chemical characteristics of the aqueous solution, while maintaining a continuous plasma generation process.

The method ensures, depending on the properties of the aqueous solution selected for processing, the decomposition of solution structure due to the application of ultrasonic impact of an acoustic field in a sinusoidal harmonic frequency-modulated mode with a power exceeding 1 W/cm² and the appearance of molecular hydrogen H₂ and molecular oxygen O₂. In addition to the above, less electricity is required to break the weakened structural bonds for the plasma electrolytic process to take place, and the speed of the process of decomposition of the aqueous solution into hydrogen and oxygen increases significantly, and then, under the impact of directed acoustic pressure, the flow of the obtained molecular gases moves in a direction at the speed of a sound wave to the electromagnetic separator, which captures the gases, which are separated to the maximum possible extent. To increase the intensity of the water decomposition process, the acoustic impact propagation vector is perpendicular to the electric field vector.

The proposed method for producing hydrogen and oxygen from water and aqueous solutions is implemented within a device, which is schematically shown in the drawing.

The device consists of a reactor in the form of a container 1 with water 2, a piezoacoustic emitter 3, which is installed in the reactor 1, with an acoustic impact propagated directionally along a vector 4 powered by a power source 5, the power source 6 is connected to the anode 7 and cathode 8, in which the thermionic insert is made of tungsten, zirconium or hafnium, the direction of the current in the water along the vector 9 is perpendicular to the acoustic impact propagation vector 4, the obtained gaseous hydrogen and gaseous oxygen are captured separately by the branch pipes 10 and 11 of the electromagnetic output separators, the coils of branch pipes 10 and 11 are connected, respectively, to a DC power source 12, thereby generating oppositely directed magnetic fields.

The method is implemented as follows. The reactor 1 is filled with water 2 below the level of electromagnetic outlet branch pipes 10 and 11, the electrolysis process is initiated simultaneously with the application of acoustic impact to the water and starting of electromagnetic separators, including power sources 5, 6, and 12.

By adjusting the values of frequency, current and voltage of power sources 5 and 6, the conversion of electrical energy from the power source 6 into a plasma electrolytic process between the anode and cathode in water is achieved, with the removal of the gaseous phase from it - hydrogen from the cathode region, and oxygen from the anode region. Under the influence of the directional acoustic pressure vector, the flow of obtained molecular gases is directed to the active electromagnetic separator with branch pipes 10 and 11, which separately captures gaseous hydrogen and oxygen.

The plasma electrolytic process of water decomposition is maintained by further adjustment of the output parameters of the power sources of electrical and acoustic impact 5, 6 from the following ranges of their values: voltage - from 5 V to 200 V; current - from 120 A to 200 A; frequency - from 30 kHz to 100 kHz; and by selecting the frequency of the acoustic impact from the range of values from 1 kHz to 2.4 MHz with a sound wave power of not less than 1 W/cm².

Thus, the method ensures the decomposition of water, sea water, waste water and other aqueous compositions into gases, hydrogen and oxygen, by means of three controlled processes: acoustic pressure directed towards the separate gas outlets, the formation of plasma and the separation of gas outlets, hydrogen and oxygen, by oppositely directed magnetic fields. The speed of the process, its productivity and reduction of energy consumption are ensured by the simultaneous interaction of acoustic, electrical and magnetic directional impacts.

## Claims

1. A method for producing hydrogen and oxygen from water and aqueous solutions, which includes electrolysis of water under the action of an electric current flowing between electrodes with the formation of hydrogen gas at the cathode and oxygen gas at the anode and application of acoustic impact to the water by means of an acoustic transducer, removal of gaseous hydrogen from the cathode region and oxygen from the anode region, **characterized in that** electrical energy is used in the plasma electrolytic process mode, bringing the water between the anode and cathode into a plasma state, while simultaneously applying acoustic impact to the water by means of a piezoelectric emitter, wherein the acoustic impact propagation vector is perpendicular to the direction of the electric current between the anode and cathode, the obtained gases are simultaneously removed, hydrogen from the cathode region, and oxygen from the anode region, by separately capturing them with electromagnetic separators with oppositely directed magnetic fields, where the initiation and maintenance of the plasma electrolytic process of water decomposition is implemented by adjusting the parameters of the power source, the output parameters of the electrical impact, electric current intensity, voltage, frequency and acoustic impact parameters.

2. A method for producing hydrogen and oxygen from water and aqueous solutions according to claim 1, **characterized in that** the values of the output parameters are: voltage - from 5 V to 200 V; current - from 120 A to 200 A; frequency - from 30 kHz to 100 kHz; and the frequency of the acoustic impact lies within the range from 1 kHz to 2.4 MHz and the sound wave power is not less than 1 W/cm².

3. A method for producing hydrogen and oxygen from water and aqueous solutions according to claim 1, **characterized in that** the aqueous solution is waste water.

4. A method for producing hydrogen and oxygen from water and aqueous solutions according to claim 1, **characterized in that** the aqueous solution is sea water.

5. A method for producing hydrogen and oxygen from water and aqueous solutions according to claim 1, **characterized in that** the aqueous solution is ocean water.

6. A method for producing hydrogen and oxygen from water and aqueous solutions according to claim 1, **characterized in that** the mode of acoustic impact on the aqueous solution is cavitational.

7. A method for producing hydrogen and oxygen from water and aqueous solutions according to claim 1, **characterized in that** the mode of acoustic impact on the aqueous solution is pre-cavitational.

8. A device for producing hydrogen and oxygen from water and aqueous solutions for implementing the method according to claims 1 to 7, comprising a reactor with water, a power source, an anode, a cathode, branch pipes, **characterized in that** the device comprises a piezoelectric emitter, the power source is connected to the anode and cathode, in which there is a thermionic insert, branch pipes of electromagnetic output separators, the branch pipes are connected to a DC power source.

9. A device for producing hydrogen and oxygen from water and aqueous solutions according to claim 8, **characterized in that** the piezoelectric emitter is represented by a piezo-acoustic emitter.

10. A device for producing hydrogen and oxygen from water and aqueous solutions according to claim 8, **characterized in that** the thermionic insert is made of tungsten.

11. A device for producing hydrogen and oxygen from water and aqueous solutions according to claim 8, **characterized in that** the thermionic insert is made of zirconium.

12. A device for producing hydrogen and oxygen from water and aqueous solutions according to claim 8, **characterized in that** the thermionic insert is made of hafnium.
